# EUROPÄISCHE PATENTSCHRIFT

(11) **EP 0 490 202 B1**
(45) Veröffentlichungstag und Bekanntmachung des Hinweises auf die Patenterteilung: **14.07.1993**
(21) Anmeldenummer: 91120627.4
(22) Anmeldetag: 30.11.1991
(51) Int. Cl.: B01D 53/34, B01D 53/02, B01D 53/04

(54) **Aktivkohle-Filter zum Abscheiden von Schadstoffen, wie z.B. Dioxinen und Furanen, aus Rauchgasen vor Eintritt in den Rauchgaskamin**
Activated carbon filter for separating noxious gases, such as dioxins and furans, from flue gases before entering the chimney
Filtre à charbon actif pour la séparation de gaz nocifs, comme des dioxines et furanes, à partir de gaz de fumées avant l'entrée dans la cheminée

(30) Priorität: 14.12.1990 DE 4039989; 05.09.1991 DE 4129483
(43) Veröffentlichungstag der Anmeldung: 17.06.1992
(73) Patentinhaber: MAN Gutehoffnungshütte Aktiengesellschaft, 46122 Oberhausen (DE)
(72) Erfinder: Vollhardt, Frohmut, Dipl.-Ing., W 4200 Oberhausen 11 (DE)

(56) Entgegenhaltungen:
- EP-A- 0 196 402
- DE-A- 3 224 350
- FR-A- 798 977
- GB-A- 1 550 415

## Beschreibung

Die Erfindung betrifft ein Aktivkohle-Filter zum Abscheiden von Schadstoffen, wie z.B. Dioxinen und Furanen, aus Rauchgasen vor Eintritt in den Rauchgaskamin.

Auf der Suche nach weiteren Möglichkeiten, die den Forderungen der 17. Bundes-Immissions-Schutz-Verordnung (17. BImSchV) und des Gesetzes über die Vermeidung und Entsorgung von Abfällen (AbfG) genügen, wurde ein Aktivkohle-Filter entwickelt, bei dem die nach dem Hochtemperatur-Verbrennungsteil durch Abkühlungseffekte rückgebildeten kohlenwasserstoffhaltigen Schadstoffe - Dioxine und Furane - aus den von Staub gereinigten Rauchgasen vor Eintritt in die Atmosphäre vollständig abgeschieden werden.

Es ist inzwischen hinreichend bekannt, daß wegen der hohen Sauerstoffkonzentration und Temperatur im Drehrohrofen Zerstörungsmechanismen für Dioxine und Furane existieren. Es kann jedoch nicht ausgeschlossen werden, daß durch Anlagerung an Staubpartikel diese Verbindungen im Abhitzekessel und den Rauchgasreinigungsanlagen bzw. durch Neubildung die Rauchgase mit diesen Restanteilen an Dioxinen und Furanen in die Atmosphäre gelangen. Bezogen auf den vom Ofen ausgetragenen Staub ergeben sich sehr hohe Zerstörungsgrade, die jedoch durch Neubildung dieser Schadstoffe hinter dem Drehrohrofen wieder reduziert werden.

Der Einsatz von trockenarbeitenden Aktivkohle-Filtern für die Endreinigung der Rauchgase aus Müllverbrennungsanlagen ist aus der Literatur und der Praxis bekannt.

In der DE-A 26 51 177 wird ein verfahren zum Entfernen von Schwefelverbindungen, insbesondere von H₂S, aus einem Synthesegas beschrieben, bei dem der Stoffaustausch mit dem Absorptionsmittel überwiegend in der flüssigen Phase stattfindet, da der Stoffaustausch in der flüssigen Phase wesentlich intensiver und schneller abläuft.

Aus der DE-A 38 41 889 ist bekannt, daß nach der Gasreinigungsstufe einer Müllverbrennungsanlage eine Aktivkohle-Filterstufe vor dem Reingaskamin installiert ist.

Aus der FR-A-798.977 ist eine Vorrichtung zur Reinigung von Holzgas bekannt. Das zu reinigende Gas wird mit geringer Geschwindigkeit von unten nach oben durch eine Schicht feingestoßener Holzkohle geführt. Daran schließt sich eine Luftkammer und eine Wassersprühvorrichtung an. Diese Reinigungsvorrichtung besitzt somit ein Gaszuführungsrohr, am Gefäßoberteil einen Gasaustrittsstutzen, eine Vorrichtung zum dosierten Zugeben von Wasser und am Gefäßboden eine Abzugsvorrichtung.

In der EP-A-0.196.402 wird ein Verfahren zur Reinigung von Abwasser beschrieben. In einer Aktivkohle-Maische eines Aktivkohle-Filters sollen u.a. auch Dioxine entfernt werden.

Die Aufgabe der Erfindung besteht darin, eine Vorrichtung zum Abscheiden von Schadstoffen, wie z.B. Dioxinen und Furanen, aus Rauchgasen beispielsweise bei Abfallverbrennungsanlagen vor Eintritt in den Reingaskamin und damit in die Atmosphäre zu schaffen die zum einen die bestehenden Vorschriften des 17. BImSchV und gleichrangiger Vorschriften erfüllt, und mit der zum anderen ein besonders effektiver und schneller Stoffaustausch erreicht werden soll. Mit der Vorrichtung soll eine vollständige Adsorption dieser isomeren Kohlenwasserstoffe erreicht und die Konzentration dieser Schadstoffe im Reingas unter die Nachweisgrenze gebracht werden.

Diese Aufgabe wird erfindungsgemäß in der Weise gelöst, wie es in den Patentansprüchen angegeben ist.

Infolge des mit dem erfindungsgemäßen Aktivkohle-Filter erzielbaren raschen und wirkungsvollen Abscheidevorganges können die Dimensionen der Aktivkohle-Filter im Vergleich zu Filtern des Standes der Technik kleiner gehalten werden.

Die erfindungsgemäße Vorrichtung läßt sich auch in bestehende Abfallverbrennungsanlagen einbauen, und zwar beispielsweise nach der Rauchgaswäsche vor dem Gebläse des Reingaskamines.

Grundsätzlich läßt sich das erfindungsgemäße Aktivkohle-Filter auch für die Rauchgas-Endreinigung bei anderen Verbrennungsanlagen, wie Wirbelbettfeuerungen, Schwelanlagen etc., einsetzen.

Ein Ausführungsbeispiel der Erfindung wird nachstehend anhand einer Schnittdarstellung näher erläutert.

Das Filtergefäß (1) wird durch einen Filterdeckel (2) geschlossen. Am Filterdeckel bzw. im oberen Teil der Seitenwand befinden sich mindestens eine Öffnung für das Rauchgaszuführungsrohr (3), ferner die Zugabevorrichtung (6) für mikrokristallinen Kohlenstoff - Aktivkohle - und die Zugabevorrichtung (7) für die Wasserbeimischung.

Das Filtergefäß (1) ist am Gefäßboden (16) mit einer Abzugsvorrichtung (11) sowie an der Gefäßwand (14) mit einer gasdichten Überlaufvorrichtung (18) für den mit Dioxinen und Furanen angereicherten Kohlenstoffschlamm ausgerüstet, ferner ist oberhalb der Überlaufvorrichtung (18) ein Gasaustrittsstutzen (12) angebracht.

Im unteren Bereich des Filtergefäßes (1) ist eine horizontale perforierte Trennwand (13) angeordnet, die der Verbesserung der Gasverteilung dient und das Entstehen großer Gasblasen verhindern soll.

Als perforierte Trennwände eignen sich, abhängig von den Gasdrücken und auch von der Körnung der verwendeten Aktivkohle, beispielsweise handelsübliche Düsenböden oder grobporige Glasfilter. Je kleiner die Austrittsbohrungen in einem Düsenboden sind, desto kleiner ist der Durchmesser der sich bildenden Gasbläschen und desto geringer ist die Neigung, daß sich kleine Bläschen zu größeren vereinigen. Allerdings sinkt selbstverständlich mit abnehmendem Düsenbodenbohrungsdurchmesser der Volumendurchsatz und insofern wird man die Wahl und Ausführung der perforierten Trennwand bei der Auslegung des jeweiligen Filters entscheiden.

Zur Erzeugung einer intensiven und ständigen Durchmischung (17) der Aktivkohle mit dem dosiert zugefügten Wasser kann in den Gefäßboden (16) eine drehbare Mischeinrichtung (8) installiert werden, die über einen Dichtungsstutzen (9) mit einem außen angebrachten Drehstromantrieb (10) verbunden ist.

In die Gaszuführungsleitung (3) ist eine Gasrückschlagsklappe (4) eingebaut. Die Aktivkohle (6) wird von oben in das Filtergefäß (1) aufgegeben. Das Mischwasser (7) kann ebenfalls von oben oder über eine Rohrleitung vom Deckel (2) in das Oberteil bzw. in das Unterteil des Filtergefäßes eingeführt werden.

Die intensive Durchmischung von Aktivkohle mit einem Volumenanteil von 30 - 40 % Wasser erfolgt im Unterteil des Filtergefäßes (15), die vorgesehene Adsorption der Schadstoffe, wie Dioxine und Furane, aus den durch die perforierte Trennwand (13) aufsteigenden, kleinförmigen Rauchgasblasen erfolgt weitgehend im mittleren Bereich des Filtergefäßes (17).

### Bezugsziffern:

- 1: Filtergefäß
- 2: Filtergefäßdeckel
- 3: Gaszuführungsrohr
- 4: Gasrückschlagsklappe
- 5: Rauchgaszuführungsleitung
- 6: Aktivkohle-Aufgabe
- 7: Wasser-Aufgabe
- 8: Mischeinrichtung
- 9: Dichtungsstutzen
- 10: Drehstromantrieb der Mischeinrichtung
- 11: Abzugsvorrichtung
- 12: Gasaustritts-Stutzen
- 13: Perforierte Trennwand
- 14: Gefäß-Oberteil
- 15: Gefäß-Unterteil
- 16: Gefäß-Boden
- 17: Aktivkohle-Wasser-Gemisch (Maische)
- 18: Überlauf für Aktivkohle-Wasser-Gemisch

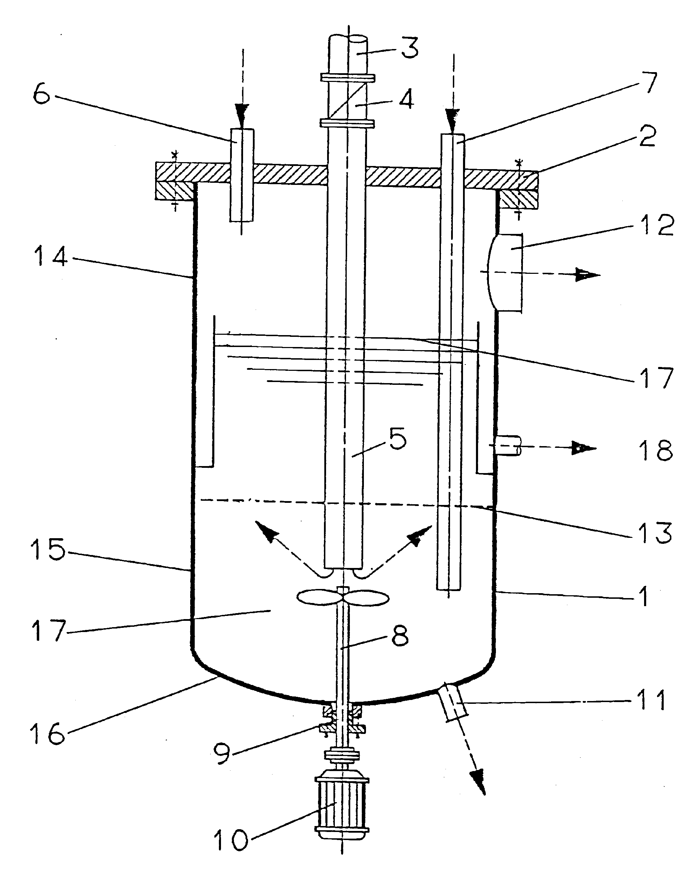

## Patentansprüche

1. Aktivkohle-Filter zum Abscheiden von Schadstoffen, wie z.B. Dioxinen und Furanen, aus Rauchgasen vor Eintritt in den Rauchgaskamin mit einem Gaszuführungsrohr (3) am Filter-Deckel (2) oder im oberen Teil der Seitenwand des Filtergefäßes (1), an das sich eine in das Gefäß-Unterteil (15) reichende Rauchgaszuführungsleitung (5) anschließt, wobei das Filtergefäß (1) mit mindestens einer Vorrichtung (6) zum dosierten Zugeben von Aktivkohle und mit mindestens einer Vorrichtung (7) zum dosierten Zugeben von Wasser ausgerüstet ist, daß am Gefäßboden (16) mindestens eine Abzugsvorrichtung (11) für den mit Schadstoffen gesättigten Aktivkohle-Schlamm vorgesehen ist, daß am Gefäßoberteil (14) mindestens ein Gasaustrittsstutzen (12) und ein Überlauf (18) zum Abzug von gesättigtem Aktivkohle-Wassergemisch (17) angebracht ist und daß oberhalb des Austrittes der Rauchgaszuführungsleitung (5) eine perforierte Trennwand (13) als Gasverteiler vorgesehen ist.

2. Aktivkohle-Filter nach Anspruch 1,
dadurch gekennzeichnet,
daß die perforierte Trennwand (13) ein Düsenboden ist.

3. Aktivkohle-Filter nach Anspruch 1,
dadurch gekennzeichnet,
daß die perforierte Trennwand (13) ein grobporiges Glasfilter ist.

4. Aktivkohle-Filter nach Anspruch 1,
dadurch gekennzeichnet,
daß im Gefäßboden (16) eine drehbare Mischeinrichtung (8) angeordnet ist.

5. Aktivkohle-Filter nach Anspruch 4,
dadurch gekennzeichnet,
daß die drehbare Mischeinrichtung (8) über einen Dichtungsstutzen (9) im Gefäßboden (16) eingelassen und mit einem Drehstromantrieb (10) verbunden ist.

6. Aktivkohle-Filter nach Anspruch 4,
dadurch gekennzeichnet,
daß die drehbare Mischeinrichtung (8) an dem Gasaustritt der Rauchgaszuführungsleitung (5) angeordnet ist und daß der Drehstromantrieb (10) oberhalb des Filterdeckels (2) des Aktivkohle-Filters (1) befestigt ist.

7. Aktivkohle-Filter nach Anspruch 1,
dadurch gekennzeichnet,
daß im oberen Teil der Rauchgaszuführungsleitung (5) eine Gasrückschlagsklappe (4) vorgesehen ist.

8. Aktivkohle-Filter nach Anspruch 1,
dadurch gekennzeichnet,
daß das Wasser durch die perforierte Trennwand (13) über eine Rohrleitung in das Unterteil des Filtergefäßes (15) geleitet wird.

9. Aktivkohle-Filter nach einem der Ansprüche 1 bis 8,
dadurch gekennzeichnet,
daß eine Steuer- und Regelanlage für die Dosierung von Aktivkohle (6) und Wasser (7) in Abhängigkeit von der Menge der zu behandelnden Rauchgase (3) und für den Abzug des mit schädlichen Gas- und Staubpartikeln gesättigten Aktivkohle-Wassergemisches (17) durch einen in der Seitenwand des Gefäßes (1) angebrachten Überlauf (18) und durch eine im Gefäßboden (16) vorgesehene Abzugsvorrichtung (11) vorgesehen ist.

10. Aktivkohle-Filter nach einem der Ansprüche 1 bis 8,
dadurch gekennzeichnet,
daß das Aktivkohle-Filter aus einem Filtergefäß oder mehreren parallelgeschalteten Filtergefäßen quadratischen, vieleckigen oder kreisförmigen Querschnitts besteht.

## Claims

1. Active charcoal filter for separation of pollutants such as dioxins and furanes from flue gases before passage into the flue, having a gas supply pipe (3) provided at the filter cover (2) or in an upper part of the side wall of the filter vessel (1) and which is connected to a flue gas supply line (5) which extends to the lower portion of the vessel, the filter vessel (1) being fitted with at least one device (6) for dosed supply of active charcoal and with at least one device (7) for dosed supply of water, and wherein at least one outlet device (11) is provided at the vessel bottom (16) for active charcoal sludge saturated with the pollutant, at least one gas outlet connection (12) and an overflow for drawing off saturated active charcoal-water mixture (17) are provided at the upper part of the vessel, and a perforated separating wall (13) is provided above the outlet of the flue gas supply line (5) as a gas distributor.

2. Active charcoal filter according to claim 1, characterised in that the perforated separating wall (13) is a nozzle plate.

3. Active charcoal filter according to claim 1, characterised in that the perforated separating wall (13) is a large pored glass filter.

4. Active charcoal filter according to claim 1, characterised in that a rotatable mixing device (8) is arranged in the vessel bottom (16).

5. Active charcoal filter according to claim 1, characterised in that the rotatable mixing device (8) is let into the vessel bottom (16) through a sealing connection (9) and is connected to an alternating current drive (10).

6. Active charcoal filter according to claim 4, characterised in that the rotatable mixing device (8) is arranged at the gas outlet of the flue gas supply line (5) and that the alternating current drive (10) is fixed above the filter cover (2) of the active charcoal filter.

7. Active charcoal filter according to claim 1, characterised in that a gas check flap valve (4) is provided in the upper part of the flue gas supply line (5).

8. Active charcoal filter according to claim 1, characterised in that the water is conducted to the lower part (15) of the filter vessel, through the perforated separating wall (13) by a pipe.

9. Active charcoal filter according to any one of claims 1 to 8, characterised in that a control and adjusting device is provided for dosing the active charcoal (6) and water (7) in dependence on the amount of flue gas (3) to be treated, and outlet of active charcoal-water mixture saturated with pollutant and dust particles is provided by an overflow (18) in the side wall of the vessel (1), and by an outlet device (11) the vessel bottom (16).

10. Active charcoal filter according to any one of claims 1 to 8, characterised in that the active charcoal filter consists of a filter vessel or a plurality of filter vessels of rectangular, polygonal or circular cross section connected in parallel.

## Revendications

1. Filtre à charbon actif pour l'extraction de substances nuisibles telles par exemple que des dioxines et des furannes, à partir des gaz de combustion avant leur entrée dans la cheminée, avec un tube d'amenée des gaz (3) sur le couvercle (2) du récipient de filtration, ou bien dans la partie supérieure de la paroi latérale du récipient de filtration (1), tube auquel se raccorde une canalisation (5) d'amenée des gaz de combustion s'étendant dans la partie inférieure (15) du récipient, tandis que le récipient de filtration (1) est équipé d'au moins un dispositif (6) pour ajouter une dose de charbon actif et d'au moins un dispositif (7) pour ajouter une dose d'eau, en ce qu'il est prévu sur le fond (16) du récipient, au moins un dispositif d'extraction (11) pour la boue de charbon actif saturée de substances nuisibles, en ce que sur la partie supérieure (14) du récipient, est rapportée au moins une tubulure de sortie de gaz (12) et un trop plein (18) pour l'extraction du mélange saturé charbon actif-eau (17), et en ce qu'il est prévu au-dessus de la sortie de la canalisation (5) d'amenée des gaz de combustion, une paroi de séparation perforée (13) jouant le rôle de répartiteur des gaz.

2. Filtre à charbon actif selon la revendication 1, caractérisé en ce que la paroi de séparation perforée (13) est un plateau à tuyères.

3. Filtre à charbon actif selon la revendication 1, caractérisé en ce que la paroi de séparation perforée (13) est un filtre en verre à gros pores.

4. Filtre à charbon actif selon la revendication 1, caractérisé en ce qu'un dispositif de mélange rotatif (8) est disposé dans le fond (16) du récipient.

5. Filtre à charbon actif selon la revendication 4, caractérisé en ce que le dispositif rotatif de mélange (8) est introduit dans le fond (16) du récipient, par l'intermédiaire d'une tubulure d'étanchéité (9) et est relié à un moteur à courant alternatif (10).

6. Filtre à charbon actif selon la revendication 4, caractérisé en ce que le dispositif rotatif de mélange (8) est disposé à la sortie de la canalisation d'amenée des gaz de combustion (5) et en ce que le moteur à courant triphasé (10) est fixé au-dessus du couvercle (2) du filtre à charbon actif (1).

7. Filtre à charbon actif selon la revendication 1, caractérisé en ce qu'il est prévu dans la partie supérieure de la canalisation d'amenée des gaz de combustion (5), un clapet de retenue des gaz (4).

8. Filtre à charbon actif selon la revendication 1, caractérisé en ce que l'eau est amenée dans la partie inférieure (15) du récipient de filtration à travers la paroi de séparation perforée (13) par l'intermédiaire d'une canalisation tubulaire.

9. Filtre à charbon actif selon une des revendications 1 à 8, caractérisé en ce qu'il est prévu une installation de commande et de réglage pour le dosage du charbon actif (6) et de l'eau (7) en fonction de la quantité des gaz de combustion (3) à traiter, et pour l'extraction du mélange de charbon actif et d'eau (17) saturé de gaz nocifs et de particules de poussières, à travers un trop plein (18) rapporté sur la paroi latérale du récipient (1) et à travers un dispositif d'extraction (11) prévu dans le fond (16) du récipient.

10. Filtre à charbon actif selon une des revendications 1 à 8, caractérisé en ce que le filtre à charbon actif est constitué d'un récipient de filtration ou de plusieurs récipients de filtration branchés en parallèle, de section transversale quadrangulaire, polygonale, ou circulaire.
